# FASCICULE DE BREVET EUROPEEN

(11) **EP 3 247 635 B1**
(45) Date de publication et mention de la délivrance du brevet: **16.05.2018**
(21) Numéro de dépôt: 16702757.2
(22) Date de dépôt: 21.01.2016
(51) Int. Cl.: B64D 29/06, F02K 1/72

(54) **SYSTÈME POUR LA POSE ET LA DÉPOSE D'UN ENSEMBLE PROPULSIF SUR UN MÂT D'UN AÉRONEF**
SYSTEM ZUR MONTAGE EINER ANTRIEBSANORDNUNG AUF EINEN MAST EINES FLUGZEUGS UND DEMONTAGE DAVON
SYSTEM FOR MOUNTING A PROPULSION ASSEMBLY ONTO A PYLON OF AN AIRCRAFT AND DISMOUNTING SAME THEREFROM

(30) Priorité: 21.01.2015 FR 1550490
(43) Date de publication de la demande: 29.11.2017
(73) Titulaire: Safran Nacelles, 76700 Gonfreville-l'Orcher (FR)
(72) Inventeur: BOILEAU, Patrick, 31170 Tournefeuille (FR); KERBLER, Olivier, 92160 Antony (FR); LEZERAC, Julien, 31000 Toulouse (FR); GONZALEZ, Aurélien, 31700 Blagnac (FR); GRALL, Loïc, 78990 Elancourt (FR); TOUPET, Ludovic, 94140 Alfortville (FR)
(74) Mandataire: Gaillarde, Frédéric F. Ch.
(86) Numéro de dépôt international: PCT/FR2016/050120
(87) Numéro de publication internationale: WO 2016/116710

(56) Documents cités:
- WO-A1-2014/132011
- CN-A- 103 112 595
- FR-A1- 2 102 187

## Description

L'invention concerne un système pour la pose et la dépose d'un ensemble propulsif sur un mât d'un aéronef, le système comportant un dispositif d'inversion de poussée.

Un aéronef est généralement mû par plusieurs turboréacteur logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un dispositif d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle

Dans le cas d'un inverseur à grilles de déviation, la réorientation du flux d'air est effectuée par des grilles de déviation, associées à des volets d'inversion venant bloquer au moins partiellement la veine de circulation d'air, le capot n'ayant qu'une simple fonction de coulissement visant à découvrir ou recouvrir ces grilles de déviation.

Les volets d'inversion, également appelés volets de blocage, quant à eux, sont activés et entraînés par le coulissement du capot mobile jusqu'à venir obstruer au moins partiellement la veine en aval des grilles, de manière à optimiser la réorientation du flux d'air froid.

On connaît des nacelles dites à structure en O, connues sous la terminologie anglo-saxonne « O-Duct », qui possèdent une structure aval présentant une structure unique sensiblement périphérique s'étendant depuis un côté du mât réacteur jusqu'à l'autre côté.

Il s'ensuit qu'une telle structure présente généralement un unique capot sensiblement périphérique qui, à fin de maintenance, s'ouvre par translation aval le long de l'axe longitudinal de la nacelle.

Pour une description détaillée, on pourra se reporter aux documents FR 2 911 372 et FR 2 952 681.

Par ailleurs, les nacelles à structure en O comportent des grilles de déviation qui sont montées mobiles en translation et aptes à être rétractées au moins partiellement dans l'épaisseur de la section médiane de la nacelle et viennent ainsi chevaucher le carter de soufflante lorsque l'inverseur de poussée est inactif, en position de jet direct. En position d'inversion de poussée, les grilles de déviation sont déplacées avec le capot mobile.

Dans le cas d'un inverseur de poussée pour une nacelle à structure en O, le mât peut être équipé de rails permettant le coulissement du capot mobile et des grilles.

Sur des ensemble propulsifs modernes, de grande dimension et possédant des structures d'une grande souplesse, cette configuration peut induire des contraintes importantes dans la structure de l'inverseur de poussée.

On connait également un dispositif d'inversion de poussée décrit dans le document FR-A-3002785, qui comporte des rails qui sont agencés de part et d'autre du mât et qui assurent le coulissement du capot mobile et des grilles de déviation.

Ce type de dispositif présente des inconvénients notamment en ce qu'en cas de déplacement relatif du turboréacteur par rapport au mât, les grilles mobiles, qui sont fixées sur le mât, risques d'être soumises à des efforts de déformation.

En effet, pour limiter le volume des nacelles modernes, la section des grilles mobiles est limitée pour limiter leur encombrement, de sorte que l'inertie des grilles et la résistance mécanique qu'elles opposent est réduite.

De plus, il existe également un risque de déplacement relatif des rails entre eux et des variations géométriques importantes qui risquent de compromettre le bon fonctionnement de la cinématique de l'inverseur de poussée.

Enfin, le montage / démontage de l'ensemble propulsif implique de démonter tout ou partie de l'inverseur de poussée.

Un système pour la pose et la dépose d'un ensemble propulsif sur un mât d'un aéronef est connu du document CN 103 112 595. Toutefois, la pose et la dépose de l'ensemble propulsif obtenue par ce système est complexe et longue car elle implique un démontage de l'inverseur de poussée.

La présente invention vise notamment à résoudre ces inconvénients et se rapporte pour ce faire à un système pour la pose et la dépose d'un ensemble propulsif sur un mât d'un aéronef, ensemble propulsif du type comprenant une nacelle et un turboréacteur, la nacelle s'étendant longitudinalement d'avant en arrière suivant un axe longitudinal, le turboréacteur étant relié sur le mât par l'intermédiaire d'au moins d'une suspension avant et d'une suspension arrière, comportant:
- une structure porteuse qui est adaptée pour porter un dispositif d'inversion de poussée et qui s'étend longitudinalement,
- une suspension avant du turboréacteur, qui porte une partie avant de la structure porteuse, et qui est fixée de façon amovible sur une partie avant du mât, et
- une suspension arrière du turboréacteur, qui porte une partie arrière de la structure porteuse, et qui est fixée de façon amovible sur une partie arrière du mât, la désolidarisation desdites suspensions du mât permettant la dépose de l'ensemble propulsif monté sur le mât.

Ainsi, le système selon l'invention permet de réduire le temps nécessaire à la pose et à la dépose de l'ensemble propulsif, lequel est désolidarisable du mât en libérant du mât les platines avant et arrière.

Selon une autre caractéristique, le dispositif d'inversion de poussée comporte au moins :
- un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle, et
- au moins une grille coulissante d'inversion de poussée qui est entraînée par le capot mobile, entre une position escamotée, correspondant à la position de fermeture du capot, et une position d'inversion de poussée correspondant à la position d'ouverture du capot, position dans laquelle la grille coulissante est déplacée vers l'aval de manière à pouvoir s'étendre à travers ledit passage ouvert par le capot,
et en ce que la structure porteuse présente la forme d'un berceau qui comporte un premier longeron et un second longeron qui s'étendent longitudinalement de part et d'autre du mât, lesdits longerons portant chacun des moyens de guidage en coulissement du capot mobile et de la grille coulissante.

Cette caractéristique permet au dispositif d'inversion de poussée de suivre les mouvements du moteur.

De plus, les moyens de guidage en coulissement du capot mobile et de la grille coulissante comportent au moins une première paire de rails de guidage de la grille, comprenant un premier rail et un second rail qui sont agencés de part et d'autre du mât et qui sont conçus pour assurer le coulissement de la grille d'inversion de poussée, et les moyens de guidage en coulissement du capot mobile et de la grille coulissante comportent au moins une seconde paire de rails de guidage du capot, comprenant un premier rail et un second rail qui sont agencés de part et d'autre du mât et qui sont conçus pour assurer le coulissement du capot mobile.

De plus, le premier rail de la première paire de rails de guidage de la grille et le premier rail de la seconde paire de rails de guidage du capot sont alignés sur une même ligne droite, et le second rail de la première paire de rails de guidage de la grille et le second rail de la seconde paire de rails de guidage du capot sont alignés sur une même ligne droite.

Aussi, le premier longeron de la structure porteuse comporte :
- une première portion de liaison qui est délimitée latéralement par un premier bord longitudinal qui s'étend au voisinage du mât, et par un second bord longitudinal qui porte le premier rail de guidage de la grille,
- une seconde portion de liaison qui est délimitée latéralement par un premier bord longitudinal qui s'étend au voisinage du mât, et par un second bord longitudinal qui porte le second rail de guidage de la grille.

Avantageusement, chaque portion de liaison comprend une ouverture qui est découverte par le capot mobile dans sa position d'ouverture, pour permettre la redirection du flux d'air, ladite ouverture étant adaptée pour être tout ou partie obstruée selon les besoins.

La structure porteuse présente une conception symétrique suivant un plan de symétrie passant par l'axe de la nacelle.

De plus, la suspension avant du turboréacteur est reliée sur un carter de soufflante du turboréacteur.

Aussi, pour éviter l'écartement des longerons, le système selon l'invention est équipé d'un moyen de retenue amovible de la structure porteuse, qui relie le premier longeron et le second longeron de la structure porteuse sur un premier flanc et sur un second flanc respectivement du mât.

Selon une variante de réalisation, le dispositif d'inversion de poussée comporte des îlots d'une structure interne fixe de l'inverseur qui sont reliés sur la structure porteuse.

Selon une autre variante de réalisation, le système comporte au moins un verrou de sécurité de non déploiement intempestif du capot mobile.

L'invention concerne également une nacelle de turboréacteur qui est équipée d'au moins un système pour la pose et la dépose d'un ensemble propulsif du type décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus schématique d'ensemble qui illustre une nacelle équipée d'un dispositif d'inversion de poussée comportant une structure porteuse portant un capot représenté en position de fermeture, selon l'invention ;
- la figure 2 est une vue de dessus schématique similaire à celle de la figure 1, qui illustre le capot mobile en position d'ouverture ;
- la figure 3 est une vue de détail en perspective, qui illustre la structure porteuse reliée sur les suspensions avant et arrière du turboréacteur ;
- la figure 4 est une vue de détail en perspective, qui illustre la liaison de la structure porteuse sur la suspension avant ;
- la figure 5 est une vue de détail en perspective, qui illustre la liaison de la structure porteuse sur la suspension arrière ;
- la figure 6 est une vue de détail en perspective qui illustre la structure porteuse seule ;
- la figure 7 est une vue de détail en perspective qui illustre les suspensions avant et arrière du turboréacteur.

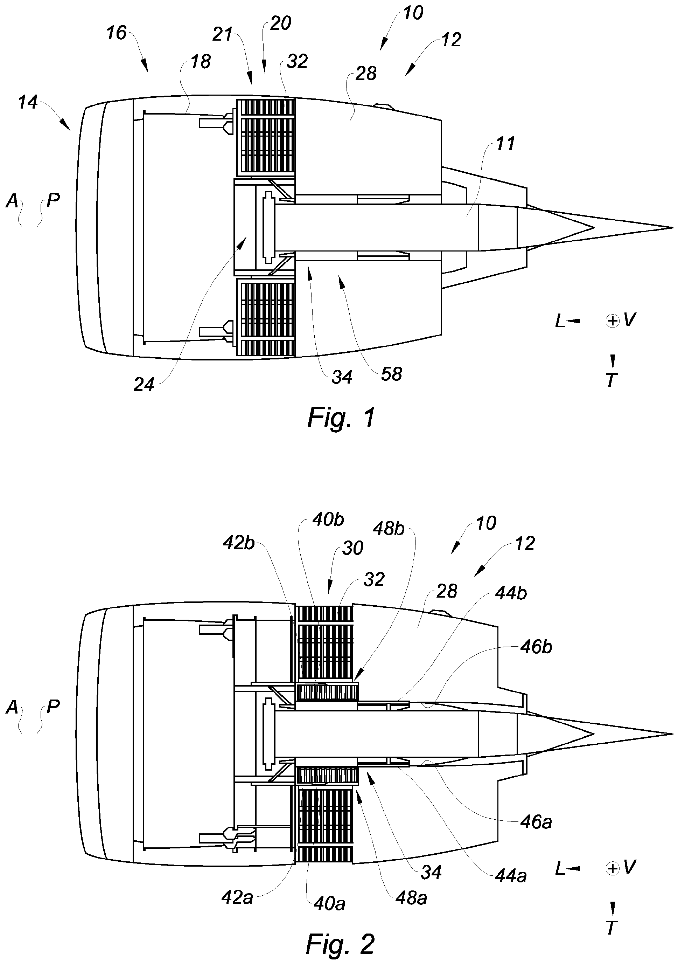

Dans la description et les revendications, on utilisera à titre non limitatif les expressions « supérieur », « inférieur » et « bas », « haut » en référence à la partie supérieure et à la partie inférieure respectivement des figures 1 à 8.

De plus, pour clarifier la description et les revendications, on adoptera à titre non limitatif la terminologie longitudinal, vertical et transversal en référence au trièdre L, V, T indiqué aux figures, dont l'axe L longitudinal est parallèle à l'axe de la nacelle.

A noter également que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite selon les figures 1 à 8.

Aussi, pour faciliter la compréhension de la description, les éléments identiques et symétriques suivant le plan P de symétrie sont indiqués par des mêmes références numériques distinguées par la lettre « a » ou « b ».

On a représenté à la figure 1 un ensemble propulsif 10 monté sur un mât 11 d'un aéronef, l'ensemble propulsif 10 comportant une nacelle 12 du type à structure en O, et un turboréacteur (non visible) logé dans la nacelle 12.

La nacelle 12 s'étend longitudinalement d'avant en arrière suivant un axe A longitudinal.

On en tend ici par turboréacteur la partie aussi appelée « moteur » de l'ensemble propulsif 10.

La nacelle 12 présente une structure sensiblement tubulaire qui s'étend longitudinalement suivant l'axe central A et qui comprend une entrée d'air 14 en amont du turboréacteur, une section médiane 16 destinée à entourer une soufflante 18 du turboréacteur, une section aval 20 destinée à entourer la chambre de combustion du turboréacteur et intégrant un dispositif 21 d'inversion de poussée par redirection d'un flux d'air circulant d'amont en aval dans une veine de la nacelle 12, et une tuyère 22 d'éjection dont la sortie est située en aval du turboréacteur.

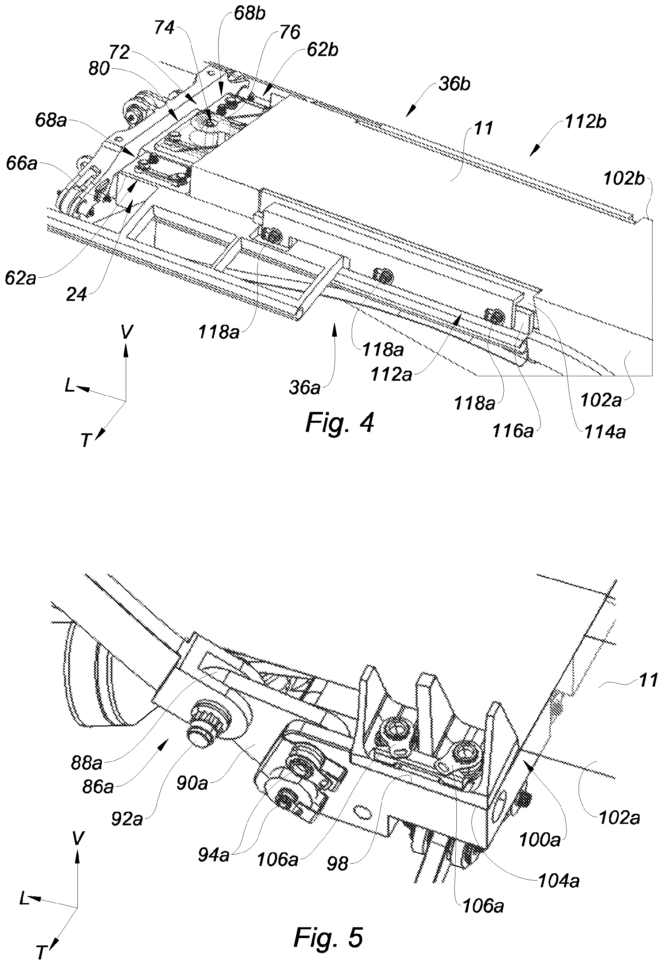

Comme on peut le voir à la figure 4, le turboréacteur est relié sur le mât 11 par l'intermédiaire d'une suspension avant 24 fixée sur le carter de soufflante 18 du turboréacteur, et d'une suspension arrière 26.

Le dispositif 21 d'inversion de poussée comprend un capot 28 qui est monté mobile en translation longitudinale d'avant en arrière suivant l'axe A de la nacelle 12, entre une position de fermeture, représentée à la figure 1, dans laquelle le capot 28 assure la continuité aérodynamique de la nacelle 12, et une position d'ouverture, représentée à la figure 2, dans laquelle le capot 28 ouvre un passage 30 de déviation du flux d'air dans la nacelle 12.

De plus, le dispositif 21 comporte des grilles coulissantes 32 d'inversion de poussée, qui sont entraînées par le capot 28 mobile, entre une position escamotée entre le carter de soufflante 18 et l'enveloppe externe (non représentée aux figures 1 et 2) de la nacelle 12, correspondant à la position de fermeture du capot 28, et une position d'inversion de poussée correspondant à la position d'ouverture du capot 28, position dans laquelle les grilles coulissantes 32 sont déplacées vers l'aval de manière à pouvoir s'étendre à travers le passage 30 ouvert par le capot 28 mobile dans la nacelle 12.

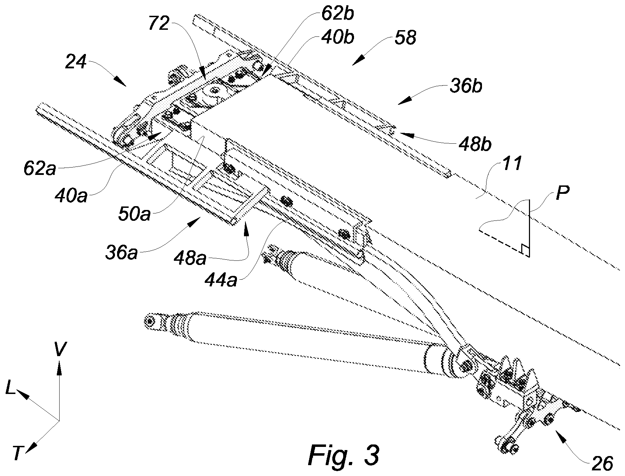

Conformément à l'invention, le dispositif 21 d'inversion de poussée est équipé d'une structure porteuse 34 formant berceau, représentée plus en détails aux figures 3 à 6, qui appartient à un système 58 pour la pose et la dépose de l'ensemble propulsif 10 sur le mât 11.

La structure porteuse 34 présente une conception symétrique suivant un plan P vertical de symétrie passant par l'axe A longitudinal de la nacelle 12.

En référence à la figure 3, la structure porteuse 34 comporte un premier longeron 36a et un second longeron 36b qui s'étendent longitudinalement de part et d'autre du mât 11.

Les longerons 36a, 36b comportent chacun des moyens de guidage en coulissement du capot 28 mobile et des grilles 32 coulissantes.

Les moyens de guidage en coulissement comportent une première paire de rails de guidage des grilles 32 qui comprend un premier rail 40a et un second rail 40b qui s'étendent longitudinalement, qui sont agencés symétriquement suivant le plan P de symétrie, et qui sont conçus pour assurer le coulissement des grilles 32 d'inversion de poussée.

A cet effet, en référence à la figure 2, les grilles 32, de forme globalement annulaire en C autour de l'axe A de la nacelle 12, présentent un premier bord de guidage 42a et un second bord de guidage 42b qui coopèrent avec le premier rail 40a et le second rail 40b respectivement.

De plus, les moyens de guidage en coulissement comportent une seconde paire de rails de guidage du capot 28 qui comprend un premier rail 44a et un second rail 44b qui s'étendent longitudinalement le long du mât 11, qui sont agencés symétriquement suivant le plan P de symétrie, et qui sont conçus pour assurer le coulissement du capot 28 mobile.

A cet effet, le capot 28 mobile, de forme globalement annulaire en C autour de l'axe A de la nacelle 12, présente un premier bord de guidage 46a et un second bord de guidage 46b qui coopèrent avec le premier rail 44a et le second rail 44b respectivement.

Les rails de guidage des grilles 32 sont écartés transversalement par rapport aux rails de guidage du capot 28 pour permettre l'agencement de la suspension avant 24 entre les rails de guidage des grilles 32.

En outre, les rails de guidage des grilles 32 peuvent être décalés verticalement également par rapport aux rails de guidage du capot 28.

Toutefois, lorsqu'un tel agencement n'est pas nécessaire, selon une variante de réalisation non représentée, le premier rail 40a de la première paire de rails de guidage des grilles 32 et le premier rail 44a de la seconde paire de rails de guidage du capot 28 sont alignés sur une même ligne droite.

De même, par symétrie, le second rail 40b de la première paire de rails de guidage des grilles 32 et le second rail 44b de la seconde paire de rails de guidage du capot 28 sont alignés sur une même ligne droite.

Ainsi, selon cette variante de réalisation, les rails de guidage des grilles 32 et les rails de guidage du capot 28 peuvent être réalisés en une seule pièce.

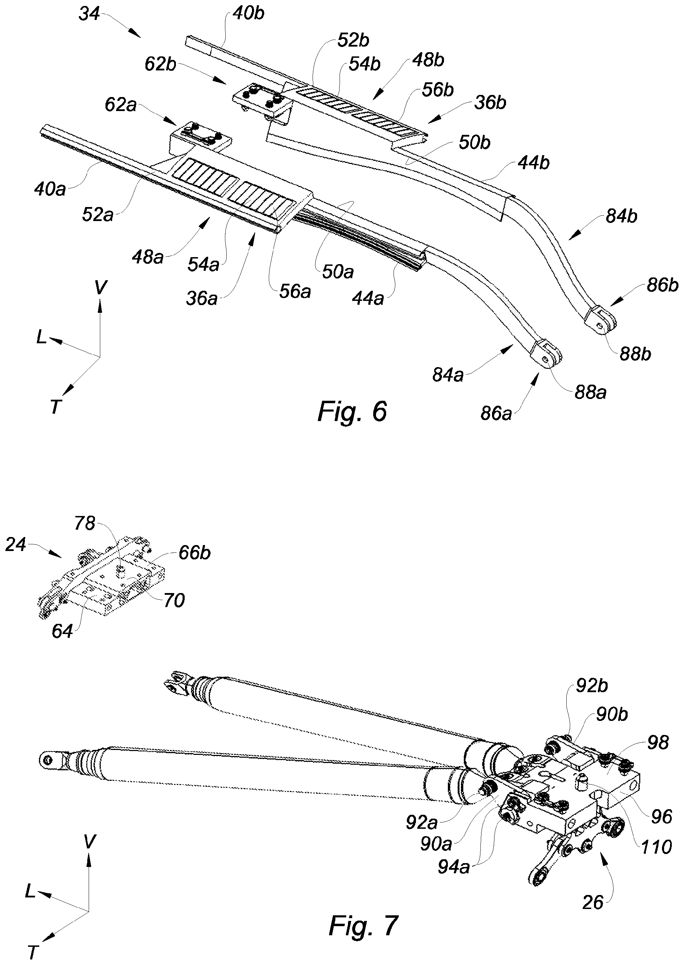

En référence à la figure 6, le premier longeron 36a du berceau 34 comporte une première portion de liaison 48a qui est délimitée latéralement par un premier bord 50a longitudinal qui s'étend au voisinage du mât 11, et par un second bord 52a longitudinal qui porte le premier rail 40a de guidage des grilles 32 coulissantes.

Par symétrie, le second longeron 36b du berceau 34 comporte une seconde portion de liaison 48b qui est délimitée latéralement par un premier bord 50b longitudinal qui s'étend au voisinage du mât 11, et par un second bord 52b longitudinal qui porte le second rail 40b de guidage des grilles 32 coulissantes.

Aussi, chaque portion de liaison 48a, 48b comprend une ouverture 54a, 54b qui est découverte par le capot 28 mobile dans sa position d'ouverture, pour permettre la redirection du flux d'air.

Selon un exemple de réalisation préféré, illustré à la figure 6, chaque ouverture 54a, 54b est équipée d'une grille fixe 56a, 56b fixe respectivement, chaque grille comportant des ailettes conçues pour rediriger le flux d'air vers l'avant de la nacelle 12, pour participer à l'inversion de poussée, lorsque le capot 28 mobile occupe sa position d'ouverture.

Avantageusement, les ailettes des grilles fixes 56a, 56b peuvent être agencées de façon à orienter le flux d'air suivant un angle incliné transversalement pour éviter de rediriger le flux d'air vers l'aile de l'aéronef.

En variante, chaque ouverture 54a, 54b, ou une des ouvertures 54a, 54b, peut être tout ou partie obstruée pour optimiser l'efficacité de l'inverseur de poussée.

En effet, en jouant sur la surface d'éjection des ouvertures 54a, 54b, il est possible de jouer sur le rapport entre la surface d'éjection de la tuyère de l'ensemble propulsif et la surface d'éjection du passage 30 découvert par le capot 28 mobile de l'inverseur. Ce rapport, qui idéalement tend vers la valeur un, est connu sous la dénomination anglaise « area match ».

Conformément à l'invention, le système 58 pour la pose et la dépose de l'ensemble propulsif 10 comprend la structure porteuse 34 qui est adaptée pour porter les grilles 32 coulissantes et le capot 28 mobile.

Le système 58 est conçu pour favoriser la pose et le dépose de l'ensemble propulsif 10 en libérant la suspension avant 24 et la suspension arrière 26 qui relient le turboréacteur sur le mât 11.

Dans ce but, la structure porteuse 34 comporte une partie avant qui est reliée sur la suspension avant 24 du turboréacteur, et une partie arrière qui est reliée sur la suspension arrière 26 du turboréacteur.

Comme on peut le voir aux figures 3 à 7, la structure porteuse 34 comporte une première patte 62a qui s'étend horizontalement depuis le bord 50a intérieur du premier longeron 36a du berceau 34.

Par symétrie suivant le plan P, la structure porteuse 34 comporte une seconde patte 62b qui horizontalement depuis le bord 50b intérieur du second longeron 36b du berceau 34.

De façon complémentaire, la suspension avant 24 du turboréacteur présente un premier méplat 66a conçu pour être en appui vertical et fixé sur la première patte 62a associée la structure porteuse 34 au moyen de deux boulons 68a, un second méplat 66b conçu pour être en appui vertical et fixé sur la seconde patte 62b associée de la structure porteuse 34 au moyen de deux boulons 68b, et un troisième méplat central 70 interposé entre les deux autre méplats.

La méplat central 70 est en appui vertical sur une potence 72 qui s'étend horizontalement depuis l'extrémité libre avant du mât 11 et qui délimite une nervure 74 de renfort.

La nervure 74 délimite un trou 76 de passage adapté pour coopérer avec un pion de centrage 78 monté sur la suspension avant 24.

De plus, la potence 72 est fixée de façon amovible sur la suspension avant 24 par quatre boulons 80.

Aussi, le premier longeron 36a du berceau 34 comporte une première branche 84a qui s'étend globalement longitudinalement vers l'arrière pour former une première chape 86a de liaison.

La première chape 86a comporte deux oreilles qui délimitent entre elles une fente 88a verticale conçue pour coopérer avec une première biellette 90a.

La première biellette 90a est reliée à une extrémité sur la première chape 86a par un premier axe 92a, et à une autre extrémité sur la suspension arrière 26 du turboréacteur par deux axes 94a dont un axe excentrique permettant un réglage de jeu transversal de montage entre le berceau 34 et le mât 11.

Selon la figure 7, la suspension arrière 26 est délimitée verticalement par une face inférieure 96 agencée en regard du turbocompresseur, et une face supérieure 98 qui est en appui sur une face inférieure du mât 11.

De plus, le mât 11 comporte une première équerre 100a qui s'étend depuis un premier flanc 102a du mât et qui présente une face d'appui 104a en appui vertical sur la face supérieure 98 de la suspension arrière 26.

La première équerre 100a est fixée de façon amovible sur la suspension arrière 26 par deux boulons 106a.

Par symétrie suivant le plan P, le second longeron 36b du berceau 34 comporte une seconde branche 84b qui s'étend globalement longitudinalement vers l'arrière pour former une seconde chape 86b de liaison.

La seconde chape 86b comporte deux oreilles qui délimitent entre elles une fente 88b verticale conçue pour coopérer avec une seconde biellette 90b.

La seconde biellette 90b est reliée à une extrémité sur la seconde chape 86b par un premier axe 92b, et à une autre extrémité sur la suspension arrière 26par deux axes (non visibles) dont un axe excentrique permettant un réglage de jeu de montage du berceau 34.

De plus, le mât 11 comporte une seconde équerre (non visible) qui s'étend depuis un second flanc 102b du mât et qui présente une face d'appui en appui vertical sur la face supérieure 98 de la suspension arrière 26.

La seconde équerre est fixée de façon amovible sur la suspension arrière 26par deux boulons.

Aussi, la face inférieure du mât 11 délimite un trou de passage qui coopère avec un pion de centrage 110 qui s'étend verticalement depuis la suspension arrière 26.

Ainsi, l'invention permet une pose et une dépose rapide et simplifiée de l'ensemble propulsif sur le mât 11 en démontant du mât 11 la suspension avant 24et la suspension arrière 26.

Cette caractéristique permet notamment de réduire le temps nécessaire aux compagnies aériennes pour changer l'ensemble propulsif sur un aéronef.

De plus, l'invention permet une réduction du temps nécessaire à la préparation de l'assemblage de la nacelle et du turboréacteur préalable au montage sur avion.

Aussi, l'invention permet au dispositif d'inversion de poussée de suivre globalement les mouvements du turboréacteur, la structure porteuse 34 étant reliée indirectement sur le carter de soufflante 18.

Cette caractéristique permet notamment aux grilles 32 coulissantes et au capot 28 mobile, ainsi que leur rails de guidage 40a, 40b, 44a, 44b de suivre le mouvement du turbocompresseur.

Selon un exemple de réalisation de l'invention illustré à la figure 4, le système 58 est équipé d'un moyen de retenue amovible de la structure porteuse 34, ou moyen de butée, qui relie le premier longeron 36a et le second longeron 36b de la structure porteuse 34 sur le premier flanc 102a et sur le second flanc 102b respectivement du mât 11, afin d'empêcher l'écartement transversal réciproque des longerons 36a, 36b de la structure porteuse 34.

Toutefois, le moyen de retenue amovible est conçu pour permettre un mouvement longitudinal et un mouvement vertical de la structure porteuse 34 par rapport au mât 11.

A cet effet, le moyen de retenue comporte un premier profilé 112a longitudinal, de section en U, qui délimite une rainure 114a longitudinale ouverte vers le bas, en regard du turboréacteur, et qui est fixé sur le premier flanc 102a du mât 11.

Complémentairement, le moyen de retenue comporte une première patte 116a de retenue qui s'étend verticalement vers le haut depuis le premier longeron 36a de la structure porteuse 34, et qui s'étend longitudinalement dans la rainure 114a du premier profilé 112a prévu à cet effet.

La première patte 116a et le premier profilé associé sont fixés ensemble par trois axes 118a transversaux de retenue qui sont montés de façon amovible pour permettre de libérer la structure porteuse 34 du mât 11.

Par symétrie suivant le plan P de symétrie, le moyen de retenue comporte un second profilé 112b longitudinal, de section en U, qui délimite une rainure longitudinale ouverte vers le bas, en regard du turboréacteur, et qui est fixé sur le second flanc 102b du mât 11.

Complémentairement, le moyen de retenue comporte une seconde patte de retenue qui s'étend verticalement vers le haut depuis le premier longeron 36a de la structure porteuse 34, et qui s'étend longitudinalement dans la rainure du second profilé 112b prévu à cet effet.

La seconde patte et le second profilé 112b associé sont fixés ensemble par trois axes transversaux de retenue qui sont montés de façon amovible pour permettre de libérer la structure porteuse 34 du mât 11.

Avantageusement, le moyen de retenue ainsi conçu n'entrave pas la pose et la dépose suivant un mouvement vertical de l'ensemble propulsif sur le mât 11.

Toutefois, à titre non limitatif, selon une variante de réalisation non représentée, le moyen de retenue peut comporter des traverses, ou des bielles, qui s'étendent transversalement sous le mât 11 et qui relient entre eux les deux longerons 36a, 36b de la structure porteuse 34.

Avantageusement, selon une variante de réalisation non représentée, l'inverseur de poussée comporte des îlots d'une structure interne fixe qui sont reliés sur la structure porteuse 34.

De même, selon une variante de réalisation non représentée, le système selon l'invention comporte des verrous de sécurité conçu pour empêcher le déploiement intempestif du capot 28 mobile.

La présente description de l'invention est donnée à titre d'exemple non limitatif.

## Revendications

1. Système (58) pour la pose et la dépose d'un ensemble propulsif (10) sur un mât (11) d'un aéronef, ensemble propulsif (10) du type comprenant une nacelle (12) et un turboréacteur, la nacelle (12) s'étendant longitudinalement d'avant en arrière suivant un axe (A) longitudinal, le turboréacteur étant relié sur le mât (11) par l'intermédiaire d'au moins d'une suspension avant (24) et d'une suspension arrière (26), ledit système comportant:
- une structure porteuse (34) qui est adaptée pour porter un dispositif (21) d'inversion de poussée et qui s'étend longitudinalement,
- une suspension avant (24) du turboréacteur, qui porte une partie avant de la structure porteuse (34), et qui est fixée de façon amovible sur une partie avant du mât (11), et **caractérisé en ce qu'**il comporte:
- une suspension arrière (26) du turboréacteur, qui porte une partie arrière de la structure porteuse (34), et qui est fixée de façon amovible sur une partie arrière du mât (11), et
la désolidarisation desdites suspensions (24, 26) du mât (11) permettant la dépose de l'ensemble propulsif (10) monté sur le mât (11).

2. Système (58) pour la pose et la dépose d'un ensemble propulsif (10) selon la revendication 1, **caractérisé en ce que** le dispositif (21) d'inversion de poussée comporte au moins :
- un capot (28) qui est monté mobile en translation longitudinale d'avant en arrière selon une direction sensiblement parallèle à l'axe (A) de la nacelle (12), entre une position de fermeture dans laquelle le capot (28) assure la continuité aérodynamique de la nacelle (12), et une position d'ouverture dans laquelle le capot (28) ouvre un passage (30) dans la nacelle (12), et
- au moins une grille (32) coulissante d'inversion de poussée qui est entraînée par le capot (28) mobile, entre une position escamotée, correspondant à la position de fermeture du capot (28), et une position d'inversion de poussée correspondant à la position d'ouverture du capot (28), position dans laquelle la grille (32) coulissante est déplacée vers l'aval de manière à pouvoir s'étendre à travers ledit passage (30) ouvert par le capot (28),
et **en ce que** la structure porteuse (34) présente la forme d'un berceau qui comporte un premier longeron (36a) et un second longeron (36b) qui s'étendent longitudinalement de part et d'autre du mât (11), lesdits longerons (36a, 36b) portant chacun des moyens de guidage en coulissement du capot (28) mobile et de la grille (32) coulissante.

3. Système (58) pour la pose et la dépose d'un ensemble propulsif (10) selon la revendication 2, **caractérisé en ce que** les moyens de guidage en coulissement du capot (28) mobile et de la grille (32) coulissante comportent au moins une première paire de rails (40a, 40b) de guidage de la grille (32), comprenant un premier rail (40a) et un second rail (40b) qui sont agencés de part et d'autre du mât (11) et qui sont conçus pour assurer le coulissement de la grille (32) d'inversion de poussée, et **en ce que** les moyens de guidage en coulissement du capot (28) mobile et de la grille (32) coulissante comportent au moins une seconde paire de rails (44a, 44b) de guidage du capot (28), comprenant un premier rail (44a) et un second rail (44b) qui sont agencés de part et d'autre du mât (11) et qui sont conçus pour assurer le coulissement du capot (28) mobile.

4. Système (58) pour la pose et la dépose d'un ensemble propulsif (10) selon la revendication 3, **caractérisé en ce que** le premier rail (40a) de la première paire de rails (40a, 40b) de guidage de la grille (32) et le premier rail (44a) de la seconde paire de rails (44a, 44b) de guidage du capot (28) sont alignés sur une même ligne droite, et le second rail (40b) de la première paire de rails (40a, 40b) de guidage de la grille (32) et le second rail (44b) de la seconde paire de rails (44a, 44b) de guidage du capot (28) sont alignés sur une même ligne droite.

5. Système (58) pour la pose et la dépose d'un ensemble propulsif (10) selon l'une quelconque des revendications 2 à 4, **caractérisé en ce que** le premier longeron (36a) de la structure porteuse (34) comporte :
- une première portion de liaison (48a) qui est délimitée latéralement par un premier bord (50a) longitudinal qui s'étend au voisinage du mât (11), et par un second bord (52a) longitudinal qui porte le premier rail (40a) de guidage de la grille (32),
- une seconde portion de liaison (48b) qui est délimitée latéralement par un premier bord (50b) longitudinal qui s'étend au voisinage du mât (11), et par un second bord (52b) longitudinal qui porte le second rail (40b) de guidage de la grille (32).

6. Système (58) pour la pose et la dépose d'un ensemble propulsif (10) selon la revendication 5, **caractérisé en ce que** chaque portion de liaison (48a, 48b) comprend une ouverture (54a) qui est découverte par le capot (28) mobile dans sa position d'ouverture, pour permettre la redirection du flux d'air, ladite ouverture (54a) étant adaptée pour être tout ou partie obstruée selon les besoins.

7. Système (58) pour la pose et la dépose d'un ensemble propulsif (10) selon l'une quelconque des revendications précédentes, **caractérisé en ce que** la structure porteuse (34) présente une conception symétrique suivant un plan (P) de symétrie passant par l'axe (A) de la nacelle (12).

8. Système (58) pour la pose et la dépose d'un ensemble propulsif (10) selon l'une quelconque des revendications précédentes, **caractérisé en ce que** la suspension avant (24) du turboréacteur est reliée sur un carter de soufflante (18) du turboréacteur.

9. Système (58) pour la pose et la dépose d'un ensemble propulsif (10) selon l'une quelconque des revendications 2 à 8, **caractérisé en ce qu'**il est équipé d'un moyen de retenue amovible de la structure porteuse (34), qui relie le premier longeron (36a) et le second longeron (36b) de la structure porteuse (34) sur un premier flanc et sur un second flanc respectivement du mât (11) pour assurer le passage des efforts entre les longerons (36a, 36b).

10. Système (58) pour la pose et la dépose d'un ensemble propulsif (10) selon l'une quelconque des revendications précédentes, **caractérisé en ce que** le dispositif d'inversion de poussée comporte des îlots d'une structure interne fixe de l'inverseur qui sont reliés sur la structure porteuse (34).

11. Système (58) pour la pose et la dépose d'un ensemble propulsif (10) selon l'une quelconque des revendications 2 à 9, **caractérisé en ce qu'**il comporte au moins un verrou de sécurité de non déploiement intempestif du capot (28) mobile.

12. Nacelle (12) de turboréacteur, **caractérisée en ce qu'**elle est équipée d'au moins un système (58) pour la pose et la dépose d'un ensemble propulsif (10) selon l'une quelconque des revendications précédentes.

## Patentansprüche

1. System (58) für die Montage und die Demontage einer Antriebsanordnung (10) auf einem Mast (11) eines Luftfahrzeugs, Antriebsordnung (10) vom Typ, der eine Gondel (12) und ein Turboluftstrahltriebwerk, umfasst, wobei sich die Gondel (12) längs von vorn nach hinten entlang einer Längsachse (A) erstreckt und das Turboluftstrahltriebwerk auf dem Mast (11) mittels mindestens einer vorderen Aufhängung (24) und einer hinteren Aufhängung (26) verbunden ist, wobei das System Folgendes umfasst:
- eine Tragstruktur (34), die angepasst ist, um eine Schubumkehrvorrichtung (21) zu tragen, und die sich längs erstreckt,
- eine vordere Aufhängung (24) des Turboluftstrahltriebwerks, die einen vorderen Teil der Tragstruktur (34) trägt und abnehmbar auf einem vorderen Teil des Masts (11) befestigt ist, und **dadurch gekennzeichnet, dass** sie Folgendes umfasst:
- eine hintere Aufhängung (26) des Turboluftstrahltriebwerks, die einen hinteren Teil der Tragstruktur (34) trägt und abnehmbar auf einem hinteren Teil des Masts (11) befestigt ist, und
wobei die Trennung der Aufhängungen (24, 26) von dem Mast (11) die Demontage der Antriebsanordnung (10), die auf den Mast (11) montiert ist, erlaubt.

2. System (58) für die Montage und die Demontage einer Antriebsanordnung (10) nach Anspruch 1, **dadurch gekennzeichnet, dass** die Schubumkehrvorrichtung (21) mindestens Folgendes umfasst:
- eine Haube (28), die in Längsverschiebung von vorn nach hinten entlang einer Richtung im Wesentlichen parallel zu der Achse (A) der Gondel (12) zwischen einer Schließposition, in der die Haube (28) die aerodynamische Kontinuität der Gondel (12) sicherstellt, und einer Öffnungsposition, in der die Haube (28) eine Passage (30) in der Gondel (12) öffnet, beweglich montiert ist, und
- mindestens ein gleitendes Gitter (32) zur Schubumkehr, das von der beweglichen Haube (28) zwischen einer eingefahrenen Position, die der Schließposition der Haube (28) entspricht, und einer Schubumkehrposition, die der Öffnungsposition der Haube (28) entspricht, in der das begleitende Gitter (32) derart stromabwärts verlagert ist, dass es sich durch die von der Haube (28) geöffnete Passage (30) erstrecken kann, angetrieben wird,
und dass die Tragstruktur (34) die Form eines Sattels aufweist, der einen ersten Längsträger (36a) und einen zweiten Längsträger (36b) umfasst, die sich längs auf jeder Seite des Masts (11) erstrecken, wobei die Längsträger (36a, 36b) jeweils Gleitführungsmittel der beweglichen Haube (28) und des gleitenden Gitters (32) tragen.

3. System (58) für die Montage und die Demontage einer Antriebsanordnung (10) nach Anspruch 2, **dadurch gekennzeichnet, dass** die Gleitführungsmittel der beweglichen Haube (28) und des gleitenden Gitters (32) mindestens ein Paar Schienen (40a, 40b) zum Führen des Gitters (32) umfassen, das eine erste Schiene (40a) und eine zweite Schiene (40b) umfasst, die auf jeder Seite des Masts (11) eingerichtet und ausgelegt sind, um das Gleiten des Schubumkehrgitters (32) sicherzustellen, und dass die Gleitführungsmittel der beweglichen Haube (28) und des gleitenden Gitters (32) mindestens ein zweites Paar von Schienen (44a, 44b) zum Führen der Haube (28) umfassen, das eine erste Schiene (44a) und eine zweite Schiene (44b) umfasst, die auf jeder Seite des Masts (11) angeordnet und ausgelegt sind, um das Gleiten der beweglichen Haube (28) sicherzustellen.

4. System (58) für die Montage und die Demontage einer Antriebsanordnung (10) nach Anspruch 3, **dadurch gekennzeichnet, dass** die erste Schiene (40a) des ersten Paars von Schienen (40a, 40b) zum Führen des Gitters (32) und die erste Schiene (44a) des zweiten Paars von Schienen (44a, 44b) zum Führen der Haube (28) auf derselben geraden Linie ausgerichtet sind, und die zweite Schiene (40b) des ersten Paars von Schienen (40a, 40b) zum Führen des Gitters (32) und die zweite Schiene (44b) des zweiten Paars von Schienen (44a, 44b) zum Führen der Haube (28) auf derselben geraden Linie ausgerichtet sind.

5. System (58) für die Montage und die Demontage einer Antriebsanordnung (10) nach einem der Ansprüche 2 bis 4, **dadurch gekennzeichnet, dass** der erste Längsträger (36a) der Tragstruktur (34) Folgendes umfasst:
- einen ersten Verbindungsabschnitt (48a), der seitlich von einem ersten Längsrand (50a), der sich in der Nähe des Masts (11) erstreckt, und von einem zweiten Längsrand (52a), der die erste Schiene (40a) zum Führen des Gitters (32) trägt, abgegrenzt ist,
- einen zweiten Verbindungsabschnitt (48b), der seitlich von einem ersten Längsrand (50b), der sich in der Nähe des Masts (11) erstreckt, und von einem zweiten Längsrand (52b), der die zweite Schiene (40b) zum Führen des Gitters (32) trägt, abgegrenzt ist.

6. System (58) für die Montage und die Demontage einer Antriebsanordnung (10) nach Anspruch 5, **dadurch gekennzeichnet, dass** jeder Verbindungsabschnitt (48a, 48b) eine Öffnung (54a) umfasst, die von der beweglichen Haube (28) in ihrer Öffnungsposition abgedeckt wird, um die Umlenkung des Luftstroms zu erlauben, wobei die Öffnung (54a) angepasst ist, um nach Bedarf ganz oder teilweise verschlossen zu sein.

7. System (58) für die Montage und die Demontage einer Antriebsanordnung (10) nach einem der vorhergehenden Ansprüche, **dadurch gekennzeichnet, dass** die Tragstruktur (34) eine symmetrische Konzeption entlang einer Symmetrieebene (P), die durch die Achse (A) der Gondel (12) verläuft, aufweist.

8. System (58) für die Montage und die Demontage einer Antriebsanordnung (10) nach einem der vorhergehenden Ansprüche, **dadurch gekennzeichnet, dass** die vordere Aufhängung (24) des Turboluftstrahltriebwerks mit einem Gebläsegehäuse (18) des Turboluftstrahltriebwerks verbunden ist.

9. System (58) für die Montage und die Demontage einer Antriebsanordnung (10) nach einem der Ansprüche 2 bis 8, **dadurch gekennzeichnet, dass** es mit einem abnehmbaren Rückhaltemittel der Tragstruktur (34) ausgestattet ist, das den ersten Längsträger (36a) und den zweiten Längsträger (36b) der Tragstruktur (34) jeweils auf einer ersten Flanke und auf einer zweiten Flanke des Masts (11) verbindet, um die Passage der Kräfte zwischen den Längsträgern (36a, 36b) sicherzustellen.

10. System (58) für die Montage und die Demontage einer Antriebsanordnung (10) nach einem der vorhergehenden Ansprüche, **dadurch gekennzeichnet, dass** die Schubumkehrvorrichtung Inseln einer stationären internen Struktur des Umkehrers, die auf der Tragstruktur (34) verbunden sind, umfasst.

11. System (58) für die Montage und die Demontage einer Antriebsanordnung (10) nach einem der Ansprüche 2 bis 9, **dadurch gekennzeichnet, dass** es mindestens einen Sicherheitsriegel des nicht willkürlichen Ausfahrens der beweglichen Haube (28) umfasst.

12. Gondel (12) für Turboluftstrahltriebwerk, **dadurch gekennzeichnet, dass** sie mit mindestens einem System (58) für die Montage und die Demontage einer Antriebsanordnung (10) nach einem der vorhergehenden Ansprüche ausgestattet ist.

## Claims

1. A system (58) for installing and removing a propulsion unit (10) on a mast (11) of an aircraft, which propulsion unit (10) being of the type comprising a nacelle (12) and a turbojet engine, the nacelle (12) extending longitudinally from fore to aft along a longitudinal axis (A), the turbojet engine being linked onto the mast (11) via at least one front suspension (24) and one rear suspension (26),
said system including:
- a support structure (34) which is adapted to carry a thrust reverser device (21) and which extends longitudinally,
- a front suspension (24) of the turbojet engine, which carries a front portion of the support structure (34), and which is removably fastened onto a front portion of the mast (11),
and **characterized in that** it includes:
- a rear suspension (26) of the turbojet engine, which carries a rear portion of the support structure (34), and which is removably fastened onto a rear portion of the mast (11), and
the detachment of said suspensions (24, 26) from the mast (11) enabling the removal of the propulsion unit (10) mounted on the mast (11).

2. The system (58) for installing and removing a propulsion unit (10) according to claim 1, **characterized in that** the thrust reverser device (21) includes at least:
- one cowl (28) which is mounted movable in longitudinal translation from fore to aft according to a direction substantially parallel to the axis (A) of the nacelle (12), between a closed position in which the cowl (28) ensures the aerodynamic continuity of the nacelle (12), and an open position in which the cowl (28) opens a passage (30) in the nacelle (12), and
- one sliding thrust reverser cascade (32) which is driven by the movable cowl (28), between a retracted position, corresponding to the closed position of the cowl (28), and a thrust reversal position corresponding to the open position of the cowl (28), in which position the sliding cascade (32) is displaced downstream so as to be able to extend through said passage (30) opened by the cowl (28),
and **in that** the support structure (34) is in the form of a cradle which includes a first spar (36a) and a second spar (36b) which extend longitudinally on either side of the mast (11), each of said spars (36a, 36b) carrying sliding guide means of the movable cowl (28) and of the sliding cascade (32).

3. The system (58) for installing and removing a propulsion unit (10) according to claim 2, **characterized in that** the sliding guide means of the movable cowl (28) and of the sliding cascade (32) include at least a first pair of guide rails (40a, 40b) of the cascade (32) comprising a first rail (40a) and a second rail (40b) which are arranged on either side of the mast (11) and which are designed to ensure the sliding of the thrust reverser cascade (32), and **in that** the sliding guide means of the movable cowl (28) and of the sliding cascade (32) include at least a second pair of guide rails (44a, 44b) of the cowl (28) comprising a first rail (44a) and a second rail (44b) which are arranged on either side of the mast (11) and which are designed to ensure the sliding of the movable cowl (28).

4. The system (58) for installing and removing a propulsion unit (10) according to claim 3, **characterized in that** the first rail (40a) of the first pair of guide rails (40a, 40b) of the cascade (32) and the first rail (44a) of the second pair of guide rails (44a, 44b) of the cowl (28) are aligned on the same straight line, and the second rail (40b) of the first pair of guide rails (40a, 40b) of the cascade (32) and the second rail (44b) of the second pair of guide rails (44a, 44b) of the cowl (28) are aligned on the same straight line.

5. The system (58) for installing and removing a propulsion unit (10) according to any one of claims 2 to 4, **characterized in that** the first spar (36a) of the support structure (34) includes:
- a first linking portion (48a) which is laterally delimited by a first longitudinal edge (50a) which extends in the vicinity of the mast (11), and by a second longitudinal edge (52a) which carries the first guide rail (40a) of the cascade (32),
- a second linking portion (48b) which is laterally delimited by a first longitudinal edge (50b) which extends in the vicinity of the mast (11), and by a second longitudinal edge (52b) which carries the second guide rail (40b) of the cascade (32).

6. The system (58) for installing and removing a propulsion unit (10) according to claim 5, **characterized in that** each linking portion (48a, 48b) comprises an opening (54a) which is uncovered by the movable cowl (28) in its open position, in order to enable the redirection of the air flow, said opening (54a) being adapted to be completely or partially obstructed as needed.

7. The system (58) for installing and removing a propulsion unit (10) according to any one of the preceding claims, **characterized in that** the support structure (34) has a symmetrical design along a plane of symmetry (P) passing through the axis (A) of the nacelle (12).

8. The system (58) for installing and removing a propulsion unit (10) according to any one of the preceding claims, **characterized in that** the front suspension (24) of the turbojet engine is linked onto a fan casing (18) of the turbojet engine.

9. The system (58) for installing and removing a propulsion unit (10) according to any one of claims 2 to 8, **characterized in that** it is equipped with a removable means for retaining the support structure (34), which links the first spar (36a) and the second spar (36b) of the support structure (34) onto a first side and onto a second side respectively of the mast (11) in order to ensure the transmission of forces between the spars (36a, 36b).

10. The system (58) for installing and removing a propulsion unit (10) according to any one of the preceding claims, **characterized in that** the thrust reverser device includes islets of an inner fixed structure of the thrust reverser which are linked to the support structure (34).

11. The system (58) for installing and removing a propulsion unit (10) according to any one of claims 2 to 9, **characterized in that** it includes at least one safety lock for inadvertent non-deployment of the movable cowl (28).

12. A turbojet engine nacelle (12), **characterized in that** it is equipped with at least one system (58) for installing and removing a propulsion unit (10) according to any one of the preceding claims.
